# EUROPEAN PATENT APPLICATION

(11) **EP 4 545 478 A1**
(43) Date of publication of application: **30.04.2025**
(21) Application number: 24205010.2
(22) Date of filing: 07.10.2024
(51) Int. Cl.: C01B 25/45, H01M 4/136, H01M 4/36, H01M 4/58, H01M 4/62, H01M 10/0525, H01M 4/02

(54) **POSITIVE ELECTRODE ACTIVE MATERIAL FOR LITHIUM SECONDARY BATTERY AND LITHIUM SECONDARY BATTERY USING THE SAME**

(30) Priority: 26.10.2023 KR 20230144439
(71) Applicant: ECOPRO BM CO., LTD., Cheongju-si, Chungcheongbuk-do 28116 (KR)
(72) Inventor: KIM, Ji Won, Cheongju-si Chungcheongbuk-do 28116 (KR); KONG, Bo Hyun, Cheongju-si Chungcheongbuk-do 28116 (KR); LEE, Joung Hee, Cheongju-si Chungcheongbuk-do 28116 (KR); KIM, Sang Hwan, Cheongju-si Chungcheongbuk-do 28116 (KR); KANG, Ji Hun, Cheongju-si Chungcheongbuk-do 28116 (KR); LYU, Dong Hyun, Cheongju-si Chungcheongbuk-do 28116 (KR); KIM, Min Ji, Cheongju-si Chungcheongbuk-do 28116 (KR)
(74) Representative: BCKIP Part mbB

(57) **Abstract**

The present specification relates to a method of preparing a positive electrode active material for a lithium secondary battery, and more particularly, to a positive electrode active material for a lithium secondary battery with excellent electrical conductivity and energy density, a method of preparing the same, and a positive electrode and a secondary battery including the same.

## Description

This application claims priority to Korean Patent Application No. 10-2023-0144439, filed on Oct. 26, 2023.

### BACKGROUND

### 1. Field of the Invention

The present specification relates to a method of preparing a positive electrode active material for a lithium secondary battery, and more particularly, to a method of preparing a positive electrode active material for a lithium secondary battery with excellent electrical conductivity and energy density.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

Various materials are used as a positive electrode active material of a lithium secondary battery, and among them, lithium metal phosphate, such as lithium iron phosphate (LiFePO₄), is widely used to manufacture lithium secondary batteries because LiFePO₄ has excellent stability and the ability to withstand many charge/discharge cycles with a relatively low manufacturing cost.

However, since LiFePO₄ has an olivine crystal structure, lithium ions can only diffuse in one dimension, and thus the ionic conductivity and electrical conductivity of LiFePO₄ are low. Accordingly, technical attempts have been made to overcome this problem by nanoizing lithium iron phosphate particles and coating them with carbon.

However, nanoized lithium iron phosphate tends to easily aggregate due to the attraction between particles and grow into a shape that is disadvantageous for energy density.

In addition, the carbon coating reduces the fluidity of lithium iron phosphate particles, which leads to a decreased density of the positive electrode active material.

With a growing demand for lithium secondary batteries and electric vehicles along with the development of technology, there is an increasing demand in related fields for increased capacity of lithium secondary batteries, which is directly related to the lifetime of products.

### SUMMARY OF THE INVENTION

In the lithium secondary battery market, the growth of lithium secondary batteries for electric vehicles is the driving force, and accordingly, the demand for positive electrode active materials used in the lithium secondary batteries is continuously increasing, and in particular, the demand for increased capacity of positive electrode active materials is gradually increasing.

In order to satisfy the market demand, the present specification is directed to providing a method of preparing a positive electrode active material which is advantageous in terms of energy density by having a spherical smooth shape and including a uniform carbon coating layer.

The present specification is also directed to providing a positive electrode including the positive electrode active material prepared according to the preparation method defined herein.

The present specification is also directed to providing a lithium secondary battery using the positive electrode defined herein.

According to an aspect of the present specification, there is provided a method of preparing a positive electrode active material for a lithium secondary battery including (a) mixing a lithium-containing raw material, a transition metal precursor, and a carbon-based compound to prepare a slurry; (b) pulverizing the particles in the slurry; and (c) heat treating the pulverized particles to obtain a lithium composite phosphorus oxide, wherein the B/A ratio of the 25 °C solubility of the carbon-based compound in water (B) to the proportion of the C element (A) is 10.00 g/(L wt%) or more.

In an embodiment, in the slurry in step (a), the Li/Metal ratio of the number of lithium atoms (Li) to the total number of atoms of metal elements excluding lithium (Metal) may be 0.95 to 1.10.

In the slurry in step (a), the C/Metal ratio of the number of carbon atoms (C) to the total number of atoms of metal elements excluding lithium (Metal) may be 0.03 to 0.1.

The B/A ratio of the 25 °C solubility of the carbon-based compound in water (B) to the proportion of the C element (A) may be 30.00 g/(L wt%) or more.

The carbon-based compound may be a compound in which the proportion of the C element (A) in the molecular structure is 30 to 60 wt%.

The carbon-based compound may have a 25 °C solubility in water (B) of 0 to 3,000 g/L.

In an embodiment, in step (a), at least one sub-raw material including an element selected from Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr may be additionally added to the slurry.

The particles pulverized in step (b) may have an average particle diameter (D50) of 1.0 µm or less.

The pulverized particles in step (c) may be obtained by spray drying the slurry obtained in step (b).

In an embodiment, the heat treatment in step (c) may be performed in an inert atmosphere at a maximum temperature of 300 to 1,000 °C for 5 to 12 hours.

According to another aspect of the present specification, there is provided a positive electrode active material for a lithium secondary battery including primary particles composed of lithium composite phosphorus oxide and secondary particles in which a plurality of primary particles are aggregated, wherein the primary particles have a spherical shape, and an amorphous carbon coating layer with a thickness of 1 to 30 nm is formed on the surface of at least some of the primary particles.

The lithium composite phosphorus oxide may be represented by Chemical Formula 2 below:

[Chemical Formula 2] LiₚMₓA_{y}B_{z}P_{1-z}O_{w}

where, M is at least one selected from the group consisting of Fe, Mn, Ni, and Co, A is at least one selected from the group consisting of Ag, Al, As, Au, Ba, Be, Bi, Ca, Cd, Ce, Cr, Cu, Ga, Hf, In, K, La, Mg, Mo, Na, Nb, Nd, Os, Pd, Pr, Pt, Rh, Ru, Sm, Sn, Sr, Ta, Ti, V, W, Y, Zn, and Zr, B is at least one selected from the group consisting of C, Si, S, N, B, F, Cl, and I, and 0.5≤p≤1.5, 0<x≤1, 0≤y<1, 0≤z<1, 0<w≤4.

The content of the carbon coating layer may be 1.4 to 1.8 wt% based on the total weight of the lithium composite phosphorus oxide.

According to still another aspect of the present specification, there is provided a positive electrode including the positive electrode active material.

According to yet another aspect of the present specification, there is provided a lithium secondary battery using the positive electrode.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a set of TEM images of the positive electrode active materials prepared according to an embodiment of the present specification; and
FIG. 2 is a graph showing the relationship between the properties of a carbon-based compound and the thickness of a coating layer in the positive electrode active materials prepared according to an embodiment of the present specification.

### DETAILED DESCRIPTION OF EXEMPLARY EMBODIMENTS

For a better understanding of the present invention, certain terms are defined herein for convenience. Unless otherwise defined herein, scientific and technical terms used in the present invention will have meanings commonly understood by those skilled in the art. In addition, unless otherwise specified in the context, the singular should be understood to include the plural, and the plural should be understood to include the singular.

Hereinafter, a method of preparing a positive electrode active material for a lithium secondary battery according to the present specification, a positive electrode including the positive electrode active material prepared thereby, and a lithium secondary battery using the positive electrode will be described in more detail.

### Method of preparing positive electrode active material for lithium secondary battery

According to an aspect of the present specification, the method of preparing a positive electrode active material for a lithium secondary battery includes (a) mixing a lithium-containing raw material, a transition metal precursor, and a carbon-based compound to prepare a slurry; (b) pulverizing the particles in the slurry; and (c) heat treating the pulverized particles to obtain a lithium composite phosphorus oxide, wherein the B/A ratio of the 25 °C solubility of the carbon-based compound in water (B) to the proportion of the C element (A) may be 10.00 g/(L wt%) or more.

Step (a) is for preparing an aqueous slurry by mixing raw materials for preparing a lithium composite phosphorus oxide in water.

The lithium-containing raw material used in step (a) is for forming a lithium composite phosphorus oxide used as a positive electrode active material, and lithium hydroxide, lithium carbonate, lithium nitrate, lithium phosphate, lithium fluoride, or lithium acetate may be used.

The lithium compound may be mixed so that the Li/Metal ratio of the number of lithium atoms (Li) to the total number of atoms of metal elements excluding lithium (Metal) is in a range of 0.95 to 1.10, for example, 0.95, 0.96, 0.97, 0.98, 0.99, 1.00, 1.01, 1.02, 1.03, 1.04, 1.05, 1.06, 1.07, 1.08, 1.09, 1.10, or a range between two of these values.

The transition metal precursor is a precursor material for a lithium composite phosphorus oxide including one or more transition metal elements and may form a lithium composite phosphorus oxide through a reaction with a lithium-containing raw material.

The transition metal precursor may include at least one transition metal such as iron, manganese, nickel, cobalt, vanadium, titanium, chromium, copper, zinc, etc. and at least one element such as phosphorus, oxygen, hydrogen, carbon, silicon, sulfur, nitrogen, boron, fluorine, chlorine, and iodine.

The transition metal precursor may include at least one transition metal and an anion.

Optionally, the transition metal precursor may be doped with a heterogeneous element. The heterogeneous element may be at least one selected from Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr.

In an embodiment, the transition metal precursor may be an iron composite hydroxide or iron composite oxide including iron, or an iron composite phosphorus oxide including iron and phosphorus.

An iron composite hydroxide precursor may be prepared through a synthetic reaction in an aqueous solution including an iron raw material.

For example, an iron composite hydroxide precursor may be prepared by adding a basic aqueous solution dropwise to an aqueous solution including an iron raw material, a phosphorus raw material, and an oxidizing agent while stirring the aqueous solution.

Here, the input amount of the iron raw material, the phosphorus raw material, and the oxidizing agent may vary depending on the composition of the desired positive electrode active material. For example, when preparing LiFePO₄, the iron raw material, the phosphorus raw material, and the oxidizing agent may be added so that the difference in input amounts is 20% or less, for example, 20%, 15%, 10%, or in a range between two of these values, based on moles, but is not limited thereto.

In another embodiment, the molar ratio of the iron raw material, the phosphorus raw material, and the oxidizing agent may be 0.8 to 1.2:0.8 to 1.2: 0.8 to 1.2, that is, each molar ratio may be 0.8, 0.85, 0.9, 0.95, 1, 1.05, 1.1, 1.15, 1.2, or in a range between two of these values, but is not limited thereto.

Meanwhile, raw materials including a heterogeneous element may be selectively further added to the aqueous solution.

Examples of the iron raw material include ferrous sulfate, iron oxalate, iron citrate, iron hydroxide, iron phosphate, iron chloride, iron nitrate, and iron acetate.

As the phosphorus raw material, phosphoric acid, iron phosphate, lithium dihydrogen phosphate, lithium ammonium monohydrogen phosphate, ammonium dihydrogen phosphate, ammonium phosphate, and phosphorus pentoxide may be used.

In addition, examples of the oxidizing agent include hydrogen peroxide, glycolic acid, citric acid, ammonium persulfate, sodium persulfate, potassium persulfate, potassium permanganate, ammonium peroxodisulfate, nitric acid, chloric acid, chromic acid, manganese dioxide, and ferric chloride.

As the basic aqueous solution, an aqueous sodium hydroxide solution, an aqueous ammonia solution, an aqueous potassium hydroxide solution, etc. may be used.

A hydroxide precursor may be prepared by adding the basic aqueous solution to an aqueous solution in which an iron raw material, a phosphorus raw material, and an oxidizing agent are added to deionized water (DIW) and reacting the mixed solution at a temperature of 40 to 80 °C, for example, 40 °C, 42.5 °C, 45 °C, 47.5 °C, 50 °C, 52.5 °C, 55 °C, 57.5 °C, 60°C, 62.5 °C, 65°C, 67.5 °C, 70 °C, 72.5 °C, 75 °C, 77.5 °C, 80 °C, or a temperature in a range between two of these values.

The above reaction may be performed under an inert condition, for example, in a reaction system in which air is replaced with at least one inert gas selected from the group consisting of N₂, Ar, He, Rn, Ne, and Xe, but is not limited thereto.

Meanwhile, if necessary, a raw material including a heterogeneous element may be further added to dope the hydroxide precursor with a heterogeneous element.

An iron composite oxide precursor may be prepared by heat treating the iron composite hydroxide precursor.

The iron composite oxide precursor may be prepared by heat treating the iron composite hydroxide precursor in a furnace at a maximum temperature of 400 to 700 °C, for example, 400 °C, 425 °C, 450 °C, 475 °C, 500 °C, 525 °C, 550 °C, 575 °C, 600 °C, 625 °C, 650 °C, 675 °C, 700 °C, or a temperature in a range between two of these values, for 3 to 10 hours, for example, 3 hours, 3.5 hours, 4 hours, 4.5 hours, 5 hours, 5.5 hours, 6 hours, 6.5 hours, 7 hours, 7.5 hours, 8 hours, 8.5 hours, 9 hours, 9.5 hours, 10 hours, or for the time in a range of two of these values, but is not limited thereto.

The heat treatment may be performed by increasing the temperature at a rate of 1 to 5 °C per minute, for example, 1 °C, 1.5 °C, 2 °C, 2.5 °C, 3 °C, 3.5 °C, 4 °C, 4.5 °C, 5 °C, or a rate per minute in a range between two of these values to reach the maximum temperature. In addition, the heat treated precursor may be obtained by furnace cooling.

Using the iron composite oxide precursor prepared in this way, it is possible to form nano primary particles with an olivine crystal structure.

As a specific example, the iron composite oxide precursor may be prepared by a method including (i) preparing an iron composite hydroxide precursor by adding a basic aqueous solution to a reaction system including an iron raw material, a phosphorus raw material, and an oxidizing agent; and (ii) preparing an iron composite oxide precursor by heat treating the iron composite hydroxide precursor, but is not limited thereto.

In another embodiment, the transition metal precursor may be represented by Chemical Formula 1 below.

[Chemical Formula 1] MₓA_{y}B_{z}P_{1-z}O_{w}

(here, M is at least one selected from the group consisting of Fe, Mn, Ni, and Co, A is at least one selected from the group consisting of Ag, Al, As, Au, Ba, Be, Bi, Ca, Cd, Ce, Cr, Cu, Ga, Hf, In, K, La, Mg, Mo, Na, Nb, Nd, Os, Pd, Pr, Pt, Rh, Ru, Sm, Sn, Sr, Ta, Ti, V, W, Y, Zn, and Zr, B is at least one selected from the group consisting of C, Si, S, N, B, F, Cl, and I, and 0<x≤1, 0≤y<1, 0≤z<1, 0<w≤4).

The transition metal precursor represented by Chemical Formula 1 is a type of oxide precursor and may be prepared by heat treating sulfate, carbonate, nitrate, acetate, silicate, phosphate, borate, fluoride, chloride or hydroxide. For example, FePO₄ is one of the non-limiting examples of Chemical Formula 1.

The carbon-based compound included in the slurry in step (a) may be used to form a carbon coating that improves the conductivity of the positive electrode active material.

For example, lithium iron phosphate-based compounds, which are olivine-based positive electrode materials, have relatively low electrical conductivity due to the strong covalent bond of PO₄³⁻. In addition, it is known that lithium iron phosphate-based compounds have low ionic conductivity because Li⁺ diffuses in one dimension due to their crystal structure.

To overcome these shortcomings, a technology to improve conductivity by forming a carbon coating and a technology to increase Li⁺ diffusion through nano-particle formation have been proposed.

However, the coated carbon is present in an amorphous phase, which may reduce the density of the positive electrode active material.

In an embodiment, the carbon-based compound may be a hydrocarbon-based compound represented by the formula CₓH_{y}O_{z}+nH₂O or Me^{a+}(CₓH_{y}O_{z}+nH₂O)^{a-}, where x is greater than 5. Here, y may be 2x or 2(x-n) and z may be x or x-n, but they are not limited thereto. In addition, Me is a metal element, and a may be an integer from 1 to 4, that is, 1, 2, 3, or 4.

Examples of the carbon-based compound include sucrose, glucose, polyvinyl alcohol (PVA), polyvinyl pyrrolidone (PVP), colloidal carbon, citric acid, tartaric acid, glycolic acid, polyacrylic acid, adipic acid, glycine, aminobenzoic acid, etc., but are not limited thereto.

Nanosized particles grow into particles with an angular shape due to aggregation during the calcination process.

As a result, reduced flowability due to amorphous carbon and angular particles reduce the density of the positive electrode active material, thereby reducing the energy density of a final product.

It is possible to improve the conductivity of the positive electrode active material and minimize the decrease in flowability due to amorphous carbon by minimizing the thickness of the carbon coating layer and increasing its uniformity.

The properties of the carbon coating layer formed on the positive electrode active material may be adjusted by controlling the properties of the carbon-based compound.

For example, the carbon-based compound may be added so that in the slurry, the C/Metal ratio of the number of carbon atoms (C) to the total number of atoms of metal elements excluding lithium (Metal) is in a range of 0.03 to 0.1, for example, 0.03, 0.04, 0.05, 0.06, 0.07, 0.08, 0.09, 0.1, or a range between two of these values.

Meanwhile, the carbon-based compound may be added so that based on 100 wt% of the lithium composite phosphorus oxide in a final product, the content of the carbon coating layer is 1.4 to 1.8 wt%, for example, 1.4 wt%, 1.45 wt%, 1.5 wt%, 1.55 wt%, 1.6 wt%, 1.65 wt%, 1.7 wt%, 1.75 wt%, 1.8 wt%, or in a range between two of these values.

When the content of the carbon-based compound in the slurry satisfies the above range, it may be easy to form a thin carbon coating layer.

The properties of the formed carbon coating may vary depending on the 25 °C solubility of the carbon-based compound in water (B) to the proportion of the C element (A).

In the method, a carbon coating layer is formed in an aqueous slurry. In other words, the method was derived based on the fact that the properties of the carbon coating layer change depending on the ratio of the solubility of the carbon-based compound in water to the proportion of the C element.

For example, when the B/A ratio is 10 g/(L wt%) or more, for example, 10 g/(L·wt%), 11 g/(L ·wt%), 12 g/(L ·wt%), 13 g/(L ·wt%), 14 g/(L ·wt%), 15 g/(L wt%), 16 g/(L wt%), 17 g/(L wt%), 18 g/(L wt%), 19 g/(L wt%), 20 g/(L wt%), 21 g/(L wt%), 22 g/(L wt%), 23 g/(L wt%), 24 g/(L wt%), 25 g/(L wt%), 26 g/(L wt%), 27 g/(L wt%), 28 g/(L wt%), 29 g/(L wt%), 30 g/(L wt%), 31 g/(L wt%), 32 g/(L wt%), 33 g/(L wt%), 34 g/(L wt%), 35 g/(L wt%), 36 g/(L wt%), 37 g/(L wt%), 38 g/(L wt%), 39 g/(L wt%), 40 g/(L wt%), 41 g/(L wt%), 42 g/(L wt%), 43 g/(L wt%), 44 g/(L wt%), 45 g/(L wt%), 46 g/(L wt%), 47 g/(L wt%), 48 g/(L wt%), 49 g/(L wt%), or 50 g/(L·wt%) or more, a thinner carbon coating layer may be uniformly formed.

In particular, in an example, when the B/A ratio of the 25 °C solubility of the carbon-based compound in water (B) to the proportion of the C element (A) is 30.00 g/(L wt%) or more, a more uniform and thinner carbon coating layer may be formed.

As such, when the B/A value satisfies the above range and the slurry in step (a) is for preparing a lithium iron phosphate-based compound, a carbon coating layer with a thickness of 1 to 30 nm, for example, 1 nm, 1.5 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, 12.5 nm, 15 nm, 17.5 nm, 20 nm, 22.5 nm, 25 nm, 27.5 nm, 30 nm, or in a range between two of these values may be uniformly formed.

The mechanism of action is not clearly known, but when the carbon-based compound included in the slurry satisfies the above-described conditions, the raw material for the lithium iron phosphate-based compound is sufficiently dispersed, which may satisfy the conditions for forming a uniform carbon coating.

The carbon-based compound may be a compound in which the proportion of the C element in the molecular structure is 30 to 60 wt%, for example, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt%, 59 wt%, 60 wt, or in a range between two of these values.

In the case of a carbon-based compound in which the proportion of the C element satisfies the above range, a product with high yield and excellent carbon coating uniformity may be manufactured even when the same content of the compound is used.

In the above manufacturing method, since a carbon coating is formed using a wet coating method, it is necessary to use a raw material with sufficient solubility in water.

Therefore, the carbon-based compound may have a 25 °C solubility of 0 to 3,000 g/L in water, for example, 3,000 g/L, 2,750 g/L, 2,500 g/L, 2,250 g/L, 2,000 g/L, 1,750 g/L, 1,500 g/L, 1,250 g/L, 1,000 g/L, 750 g/L, 500 g/L, 250 g/L, 200 g/L, 150 g/L, 100 g/L, 50 g/L, or in a range of two of these values.

When a carbon-based compound whose solubility is within the above range is used, a uniform coating may be more easily formed.

In addition, the carbon-based compound needs to be carbonized within the heat treatment temperature of step (c). When an uncarbonized carbon-based compound remains in the positive electrode active material, conductivity may be insufficiently improved or unexpected side effects may occur.

In an embodiment, in step (a), at least one sub-raw material including an element selected from Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr may be additionally added to the slurry.

When a sub-raw material is additionally added in step (a), an element not included in the transition metal precursor may be doped, or the proportion of the element included in the transition metal precursor may be adjusted.

Step (b) is for pulverizing the particles in the slurry. In the slurry, a lithium-containing raw material, a transition metal precursor, etc. may be present in the form of particles.

To grind the particles, dry or wet dispersion mills such as a ball mill, a bead mill (beads commonly used for grinding metallic raw materials such as Al beads, Fe beads, or Zr beads may be used), a vibratory mill, an attritor mill, an air jet mill, a disk mill, or an air classifier mill may be used.

The average particle diameter (D50) of the particles pulverized in step (b) may be 1 µm or less, for example, 1.0 µm, 0.9 µm, 0.8 µm, 0.7 µm, 0.6 µm, 0.5 µm, 0.4 µm, 0.3 µm, 0.2 µm, 0.1 µm, or in a range between two of these values.

The particles pulverized to have an average particle diameter in the above-described range may be easily aggregated due to surface energy. The aggregated particles grow into an angular shape during the calcination process, which leads to a decrease in the density of the positive electrode active material.

When a specific carbon-based compound is used, the interface of the particles may be activated, and aggregation may be suppressed by generating an electrostatic force on the surface. As a result, the particles grow into spherical shapes, and density characteristics may be improved.

After the pulverization in step (b), the slurry may be dried and obtained in a powder form. For example, the slurry may be dried through spry drying. In other words, the pulverized particles in step (c) may be obtained by spray drying the slurry obtained in step (b).

Spray drying, which is an example of the drying, may be performed in a spray dryer, and the spray dryer is not particularly limited as long as it is a spray drying device capable of producing dried particles having a nearly spherical shape by spray drying the slurry including the pulverized particles, and the spray dryer may be an ultrasonic sprayer, a hydraulic spray nozzle sprayer, a dual fluid spray nozzle sprayer, an ultrasonic nozzle sprayer, a filter expansion aerosol generator (FEAG), or a disk type aerosol generator.

The spray dryer may include a spray nozzle and a drying chamber, and the slurry is atomized into droplets of a predetermined size through the spray nozzle and sprayed into the drying chamber in which gas with a relatively high temperature flows.

The raw material in the droplet sprayed into the drying chamber may be dried into particles having a nearly spherical shape under the temperature in the drying chamber.

When a specific carbon-based compound is included in the slurry, unnecessary aggregation of the particles may be suppressed during spray drying. As a result, particles with a nearly spherical shape may be obtained.

When the viscosity of the slurry is adjusted after completing the pulverization in step (b), the condensation time during drying may be shortened and the decrease in density due to moisture loss during drying may be minimized.

Moisture loss during drying may reduce particle density, which leads to the formation of voids. As a result, particle strength may decrease and the stability of the positive electrode active material may be insufficient.

On the other hand, when the viscosity of the slurry is excessively high, fluidity decreases during drying and process efficiency is reduced, making it difficult to obtain spherical particles.

One way to adjust the viscosity of the slurry is adding a binder.

Step (c) may be for forming a lithium composite phosphorus oxide by heat treating the particles pulverized in step (b).

During the heat treatment of step (c), the carbon-based compound may be carbonized to form a carbon coating layer.

The heat treatment in step (c) may be performed under an inert atmosphere at a maximum temperature of 300 to 1,000 °C, for example, 300 °C, 325 °C, 350 °C, 375 °C, 400 °C, 425 °C, 450 °C, 475 °C, 500 °C, 525 °C, 550 °C, 575 °C, 600 °C, 625 °C, 650 °C, 675 °C, 700 °C, 725 °C, 750 °C, 775 °C, 800 °C, 825 °C, 850 °C, 875 °C, 900 °C, 925 °C, 950 °C, 975 °C, 1,000 °C, or a temperature in a range between two of these values, for 5 to 12 hours, for example, 5 hours, 5.5 hours, 6 hours, 6.5 hours, 7 hours, 7.5 hours, 8 hours, 8.5 hours, 9 hours, 9.5 hours, 10 hours, 10.5 hours, 11 hours, 11.5 hours, 12 hours, or a time in a range between two of these values. The maximum temperature may vary depending on the composition of the target positive electrode active material.

More specifically, the heat treatment in step (c) may be performed in a furnace under an inert atmosphere for 5 to 12 hours by raising the temperature to 300 to 1,000 °C at 2 to 5 °C per minute. When the temperature of heat treatment in step (c) is lower than 300 °C, the calcination of the precursor is insufficiently performed, and thus the crystal growth of the lithium composite phosphorus oxide may be insufficient or the formation of a carbon coating layer may be difficult. On the other hand, when the temperature of heat treatment in step (c) is higher than 1,000 °C, thermal decomposition of the lithium composite phosphorus oxide occurs, thereby reducing particle strength or causing particle collapse.

The inert atmosphere may be formed, for example, by replacing air with at least one inert gas selected from the group consisting of N₂, Ar, He, Rn, Ne, and Xe, but is not limited thereto.

Optionally, in step (c), before heat treating the particles pulverized in step (b), at least one selected from at least one sub-raw material, which includes an element selected from Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr, and a lithium-containing raw material may be additionally added. The sub-raw material may be provided in at least one form selected from sulfate, carbonate, nitrate, acetate, chloride, hydroxide, and oxide.

The content of the sub-raw material added in step (c) may vary depending on the composition of the particles and the composition of the target positive electrode active material.

During the heat treatment of the mixture of the particles and the sub-raw material in step (c), the lithium composite phosphorus oxide may be doped with the element included in the sub-raw material or at least a part of the surface of the lithium composite phosphorus oxide may be coated with the element.

The lithium composite phosphorus oxide obtained in step (c) may include primary particles and secondary particles in which the primary particles are aggregated. The lithium composite phosphorus oxide may be represented by Chemical Formula 2 below, but is not limited thereto,

[Chemical Formula 2] LiₚMₓA_{y}B_{z}P_{1-z}O_{w}

(where, M is at least one selected from the group consisting of Fe, Mn, Ni, and Co, A is at least one selected from the group consisting of Ag, Al, As, Au, Ba, Be, Bi, Ca, Cd, Ce, Cr, Cu, Ga, Hf, In, K, La, Mg, Mo, Na, Nb, Nd, Os, Pd, Pr, Pt, Rh, Ru, Sm, Sn, Sr, Ta, Ti, V, W, Y, Zn, and Zr, B is at least one selected from the group consisting of C, Si, S, N, B, F, Cl, and I, and 0.5≤p≤1.5, 0<x≤1, 0≤y<1, 0≤z<1, 0<w≤4).

Additionally, before or after performing step (c), disintegration, distribution, and/or washing processes may be performed on the lithium composite phosphorus oxide.

### Positive electrode active material for lithium secondary battery

The positive electrode active material for a lithium secondary battery according to another aspect of the present specification may include primary particles composed of a lithium composite phosphorus oxide and secondary particles in which a plurality of primary particles are aggregated, wherein the primary particles have a spherical shape, and an amorphous carbon coating layer with a thickness of 1 to 30 nm may be formed on the surface of at least some of the primary particles.

The positive electrode active material is provided as an aggregate including primary particles composed of lithium composite phosphorus oxide capable of intercalation/deintercalation of lithium and secondary particles in which a plurality of primary particles are aggregated.

The primary particle refers to a single grain or crystallite, and the secondary particle refers to an aggregate in which a plurality of primary particles are aggregated. The primary particle may have a spherical shape. Since the lithium composite phosphorus oxide prepared according to the above-described method is a particle with a smooth surface, the positive electrode active material may have an excellent pellet density.

A void and/or a grain boundary may be present between the primary particles constituting the secondary particles. In another embodiment, the positive electrode active material may include a single-crystal lithium composite phosphorus oxide with an average particle diameter of 0.1 µm or more.

The primary particles may be spaced apart from neighboring primary particles in the secondary particles to form internal voids. In addition, the primary particles may form a surface present in the secondary particles by coming into contact with internal voids, not with neighboring primary particles to form a grain boundary. Meanwhile, the surface of the primary particles, present on the outermost surface of the secondary particles and exposed to the external air, forms the surface of the secondary particles.

When the average particle diameter of the primary particles (here, the average particle diameter of the primary particles may be the average long axis length of the primary particles) is in a range of 0.2 to 1.0 µm, the optimal density of a positive electrode manufactured using the positive electrode active material according to various embodiments of the present specification may be achieved.

The average particle diameter of secondary particles in which a plurality of primary particles are aggregated may vary depending on the number of aggregated primary particles, but it may generally be 30.0 to 40.0 µm.

The positive electrode active material may have a pellet density of 2.30 g/cc or more. The positive electrode active material may have an energy density of 1,200 Wh/kg or more. A positive electrode active material with a high pellet density and high energy density may be prepared by applying the above-described method.

In an embodiment, the lithium composite phosphorus oxide may be represented by Chemical Formula 2 below,

[Chemical Formula 2] LiₚMₓA_{y}B_{z}P_{1-z}O_{w}

(here, M is at least one selected from the group consisting of Fe, Mn, Ni, and Co, A is at least one selected from the group consisting of Ag, Al, As, Au, Ba, Be, Bi, Ca, Cd, Ce, Cr, Cu, Ga, Hf, In, K, La, Mg, Mo, Na, Nb, Nd, Os, Pd, Pr, Pt, Rh, Ru, Sm, Sn, Sr, Ta, Ti, V, W, Y, Zn, and Zr, B is at least one selected from the group consisting of C, Si, S, N, B, F, Cl, and I, and 0.5≤p≤1.5, 0<x≤1, 0≤y<1, 0≤z<1, 0<w≤4).

The composition of the lithium composite phosphorus oxide may vary depending on the composition of the raw material used in the above-described preparation method and the type and composition of the sub-raw material additionally used in the preparation method.

The positive electrode active material may include a coating layer that covers at least a part of the surface of the primary particles (such as an interface between the primary particles) and/or secondary particles in which the primary particles are aggregated.

For example, the coating layer may be present to cover at least a part of the exposed surface of the primary particles. In particular, the coating layer may be present to cover at least a part of the exposed surface of the primary particles present on the outermost part of the secondary particles.

The coating layer may be present as a layer that continuously or discontinuously coats the surface of the primary particles and/or the secondary particles in which the primary particles are aggregated. When the coating layer is discontinuously present, it may be in an island form.

In some cases, the oxide may be present not only at the interface between the primary particles and at least a part of the surface of the secondary particles, but also in internal voids formed inside the secondary particles.

The coating layer present as such may improve the electrochemical properties and stability of the positive electrode active material.

The coating layer may be present in the form of a solid solution that does not form a boundary with the primary particles and/or the secondary particles in which the primary particles are aggregated, but is not necessarily present in this form.

In particular, lithium iron phosphate-based positive electrode active materials with low electrical conductivity may be compensated through carbon coating. However, a non-uniform carbon coating layer may reduce the characteristics of the positive electrode active material such as BET specific surface area, pellet density, and energy capacity.

Based on 100 wt% of the lithium composite phosphorus oxide, the content of the carbon coating layer may be 1.4 to 1.8 wt%, for example, 1.4 wt%, 1.45 wt%, 1.5 wt%, 1.55 wt%, 1.6 wt%, 1.65 wt%, 1.7 wt%, 1.75 wt%, 1.8 wt%, or in a range between two of these values.

When the above range is satisfied, the conductivity of the lithium composite phosphorus oxide may be improved, and the decrease in pellet density of the positive electrode active material may be minimized.

The thickness of the amorphous carbon coating layer formed on the surface of at least some of the primary particles may be 1 to 30 nm, for example, 1 nm, 1.5 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, 12.5 nm, 15 nm, 17.5 nm, 20 nm, 22.5 nm, 25 nm, 27.5 nm, 30 nm, or in a range between two of these values.

In a non-limiting example, the thickness of the carbon coating layer may be 10 nm or less. To form a uniform carbon coating layer with a thickness of 10 nm or less, the use of a carbon-based compound in which the B/A ratio of the 25 °C solubility in water (B) to the proportion of the C element (A) is 10.00 g/(L wt%) or more is needed.

The thickness of the carbon coating layer may be adjusted depending on the balance of fluidity and conductivity of the lithium composite phosphorus oxide.

A variety of known methods may be used to measure the thickness of the carbon coating layer. For example, the thickness of the carbon coating layer may be measured from TEM or SEM images or confirmed from line scanning results of carbon in a specific direction through EDX analysis. The thickness may be an average value of measurement values obtained through the measurement at least three times.

In particular, since the carbon coating layer has a small thickness variation, the positive electrode active material may have excellent fluidity and conductivity, which are complementary in a balanced manner.

For example, the thickness variation between the thickest region and the thinnest region in the carbon coating layer may be 10 nm or less, for example, 10 nm, 9.5 nm, 9 nm, 8.5 nm, 8 nm, 7.5 nm, 7 nm, 6.5 nm, 6 nm, 5.5 nm, 5 nm, 4.5 nm, 4 nm, 3.5 nm, 3 nm, 2.5 nm, 2 nm, 1.5 nm, 1 nm, 0.9 nm, 0.8 nm, 0.7 nm, 0.6 nm, 0.5 nm, 0.4 nm, 0.3 nm, 0.2 nm, 0.1 nm, or in a range between two of these values.

The carbon coating layer may be formed thinly and uniformly by using a carbon-based compound that satisfies specific conditions.

The performance of the positive electrode active material may be improved depending on the above-described properties of the carbon-based compound used to form the carbon coating layer.

For example, when the carbon coating layer is formed using a carbon-based compound with a high B/A ratio of the 25 °C solubility in water (B) to the proportion of the C element (A), the capacity and pellet density of the positive electrode active material may be excellent.

### Lithium secondary battery

According to still another aspect of the present specification, there is provided a positive electrode including a positive electrode current collector and a positive electrode active material layer formed on the positive electrode current collector. The positive electrode active material layer may include the positive electrode active material prepared by the method according to various embodiments described above.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode.

The lithium secondary battery may be provided as an anode-free secondary battery. Since the positive electrode is the same as described above, detailed description will be omitted for convenience, and only the remaining components not described will be described in detail below. In addition, the explanation related to the negative electrode, which will be described later, should be understood as being explained on the premise that a negative electrode is present in a lithium secondary battery.

The lithium secondary battery may be one in which the separator is replaced with a solid electrolyte. In this case, when manufacturing the positive electrode and the negative electrode, an electrode slurry composition in which a solid electrolyte is further added may be used.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an SiC composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1: 1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

The electrolyte may include a solid electrolyte such as a solid polymer electrolyte, a gel-type polymer electrolyte, or a solid inorganic electrolyte.

Regarding a lithium secondary battery including a solid electrolyte, the above-described separator may be omitted. However, since it is difficult for the electrolyte to penetrate into the positive electrode and the negative electrode, the positive electrode and the negative electrode may be formed by mixing a solid electrolyte.

The solid polymer electrolyte or the gel-type polymer electrolyte may be a salt of metal ions of Group 1 or Group 2 in the periodic table used in secondary batteries complexed with a polymer resin. For example, a polymer resin may be added to a solvated lithium salt.

The salt of metal ions may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂.

The polymer resin may be, for example, a polyether-based polymer, a polycarbonate-based polymer, an acrylate-based polymer, a polysiloxane-based polymer, a phosphazene-based polymer, a polyethylene derivative, an alkylene oxide derivative such as polyethylene oxide, a phosphate ester polymer, polyagitation lysine, polyester sulfide, polyvinyl alcohol, polyvinylidene fluoride, a polymer containing an ionic dissociation group, a branched copolymer in which an amorphous polymer such as polymethyl methacrylate (PMMA), polycarbonate, polysiloxane (PDMS), or phosphazene is copolymerized on a polyethylene oxide (PEO) main chain as a comonomer, a comb-like polymer resin and a cross-linked polymer resin.

Generally, as the solid inorganic electrolyte, a sulfide-based solid electrolyte and an oxide-based solid electrolyte may be used.

The sulfide-based solid electrolyte may be a material that includes sulfur (S) and has the conductivity of metal ions of Group 1 or Group 2 in the periodic table used in secondary batteries. For example, it may be Li-P-S-based glass or an Li-P-S-based glass ceramic, which has lithium ion conductivity.

An example of the sulfide-based solid electrolyte may be at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂OP₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂, and Li₂S-GeS₂-ZnS.

The oxide-based solid electrolyte may be a material that includes oxygen (O) and has the conductivity of metal ions of Group 1 or Group 2 in the periodic table used in secondary batteries. For example, it may be at least one selected from the group consisting of LLTO-based compounds, Li₆La₂CaTa₂O₁₂, Li₆La₂ACaNb₂O₁₂, Li₆La₂ASrNb₂O₁₂, Li₂Nd₃TeSbO₁₂, Li₃BO_{2.5}N_{0.5}, Li₉SiAlO₈, LAGP-based compounds, LATP-based compounds, LISICON-based compounds, LIPON-based compounds, perovskite-based compounds, NASICON-based compounds, and LLZO-based compounds.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

### Preparation Example 1. Preparation of positive electrode active material

### (1) Example 1

FeSO₄·7H₂O, H₃PO₄, and H₂O₂ were added to a reactor at a molar ratio of 1:1:1, and then deionized water (DIW) was added to prepare an aqueous solution. NaOH and NH₄OH were added to the aqueous solution and stirred. While the temperature in the reactor was maintained at 60 °C, N₂ gas was input to the reactor to synthesize a precursor. After completing the reaction, washing and dehydration were performed to obtain a transition metal hydroxide precursor with a composition of FePO₄·xH₂O.

After raising the temperature of the furnace having the N₂ atmosphere at a rate of 2 °C/min, the transition metal hydroxide precursor was heat treated for 5 hours while the temperature was maintained at 550 °C. Afterward, furnace cooling was performed to obtain a transition metal precursor.

A slurry was prepared by mixing the transition metal precursor, Li₂CO₃ as a lithium-containing raw material, and sucrose (C₁₂H₂₂O₁₁) as a carbon-based compound. The lithium-containing raw material was weighed so that the Li/Metal molar ratio was 1.00, and the carbon-based compound was weighed so that the C/Metal molar ratio was 0.03 to 0.1. Afterward, the precursor and the raw materials in the slurry were pulverized using a bead mill so that the D50 was 1.0 µm or less. Subsequently, the slurry was dried using a spray dryer (DJE003R from Dongjin Technology Institute).

After raising the temperature of the furnace having the N₂ atmosphere at a rate of 2 °C/min, the mixture was heat treated for 8 hours while the temperature was maintained at 850 °C. Afterward, furnace cooling and distribution were performed to obtain a positive electrode active material including lithium iron phosphate in which secondary particles have a D50 of 30.0 to 40.0 µm and primary particles have a D50 of 0.2 to 1.0 µm.

### (2) Example 2

A positive electrode active material was prepared in the same manner as in Example 1, except that maltose (C₁₂H₂₂O₁₁) was used instead of sucrose as a carbon-based compound.

### (3) Example 3

A positive electrode active material was prepared in the same manner as in Example 1, except that glucose (C₆H₁₂O₆) was used instead of sucrose as a carbon-based compound.

### (4) Example 4

A positive electrode active material was prepared in the same manner as in Example 1, except that polyethylene glycol (PEG; C₂ₙH₄ₙ₊₂Oₙ₊₁) was used instead of sucrose as a carbon-based compound.

### (5) Example 5

A positive electrode active material was prepared in the same manner as in Example 1, except that carboxymethylcellulose (CMC; -CH₂-COOH) was used instead of sucrose as a carbon-based compound.

### (6) Example 6

A positive electrode active material was prepared in the same manner as in Example 1, except that polyacrylic acid (PAA; (C₃H₄O₂)ₙ) was used instead of sucrose as a carbon-based compound.

### (7) Example 7

A positive electrode active material was prepared in the same manner as in Example 1, except that lactose (C₁₂H₂₂O₁₁) was used instead of sucrose as a carbon-based compound.

### (8) Example 8

A positive electrode active material was prepared in the same manner as in Example 1, except that starch ((C₆H₁₀O₅)ₙ⁺(H₂O)) was used instead of sucrose as a carbon-based compound.

**[Table 1]**

| Classification | Carbon raw material | Melting point (°C) | Molecular weight (g/mol) | Proportion of carbon (wt%; A) | 25 °C solubility (g/L; B) | B/A |
|---|---|---|---|---|---|---|
| Example 1 | Sucrose | 186 | 342.3 | 42 | 2,000 | 47.50 |
| Example 2 | Maltose | 102 | 342.3 | 42 | 1,080 | 25.65 |
| Example 3 | Glucose | 151 | 1802 | 40 | 909 | 22.72 |
| Example 4 | PEG | 57.5 | 44.1 | 55 | 600 | 11.00 |
| Example 5 | CMC | 274 | 263.2 | 41 | 400 | 1096 |
| Example 6 | PAA | 116 | 72.1 | 50 | 350 | 7.00 |
| Example 7 | Lactose | 202.8 | 342.3 | 42 | 195 | 463 |
| Example 8 | Starch | 256 | 194.2 | 37% | Insoluble | 0.00 |

### Experimental Example 1. Coating layer analysis of positive electrode active material

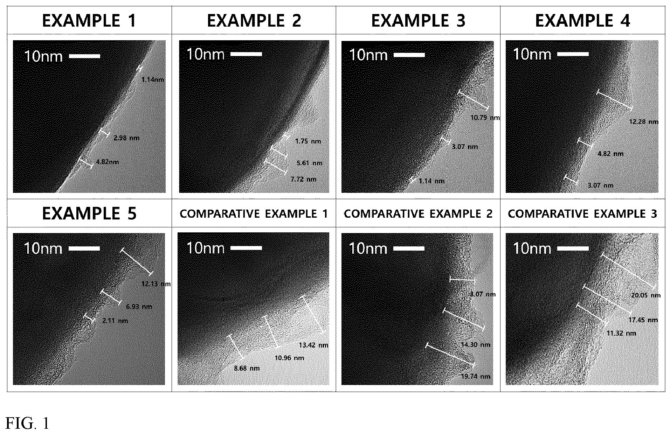

In order to confirm the properties of the carbon coating layer formed on the positive electrode active materials prepared according to Preparation Example 1, TEM images were obtained using a scanning electron microscope and are shown in FIG. 1.

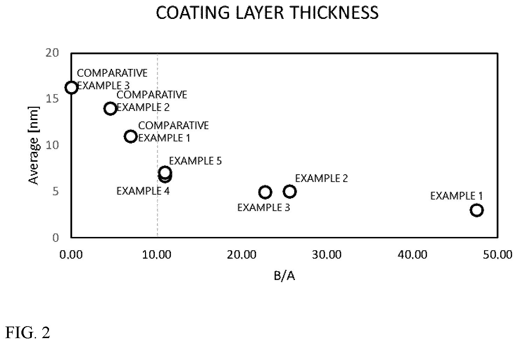

In addition, the thickness of the carbon coating layer formed on each positive electrode active material was measured three times, and the average value was calculated. The average coating layer thickness for the B/A ratio of the 25 °C solubility of each carbon-based compound in water (B) to the proportion of the C element (A) is shown in FIG. 2.

Referring to FIGS. 1 and 2, it can be seen that compared to Examples 1 to 5 in which the B/A value is 10 or more, the thickness of the coating layer rapidly increases in Comparative Examples in which the B/A value is less than 10.

In addition, it can be seen that the thickness of the coating layer becomes uniform in Example 1 in which the B/A value is 30 or more.

### Preparation Example 2. Manufacture of lithium secondary battery

94 wt% of each positive electrode active material prepared according to Preparation Example 1, 3 wt% of artificial graphite, and 3 wt% of a PVDF binder were dispersed in 3.5 g of N-methyl-2 pyrrolidone (NMP) to prepare a positive electrode slurry. The positive electrode slurry was applied on an aluminum (Al) thin film, as a positive electrode current collector, with a thickness of 20 µm, and then dried and roll pressed to manufacture a positive electrode.

A coin battery was manufactured using a lithium foil as a counter electrode to the positive electrode, a porous polyethylene membrane (Celgard 2300, thickness: 25 µm) as a separator, and a liquid electrolyte in which LiPF₆ was dissolved at a concentration of 1.15 M in a mixed solvent of ethylene carbonate and ethyl methyl carbonate at a volume ratio of 3:7 according to a commonly known manufacturing process.

### Experimental Example 2. Evaluation of electrochemical properties of lithium secondary battery

For the coin batteries manufactured in Preparation Example 2, charge/discharge experiments were performed using an electrochemical analysis device (Toscat-3100 from TOYO SYSTEM CO., LTD.) at 25 °C, a voltage range of 2.0 to 3.65 V, and a discharge rate of 0.1 to 5.0 C to measure initial charge capacity, initial discharge capacity, energy density, initial reversible efficiency, and rate characteristics (discharge capacity ratio; rate capability C-rate). The pellet density was measured after weighing 3 g of each positive electrode active material in a pelletizer and pressurizing it at 4.5 tons for 5 seconds. The energy density was calculated by multiplying the initial discharge capacity, the average voltage (3.4 V), and the pellet density.

**[Table 2]**

| Classification | 0.1 C initial charge (mAh/g) | 0.1 C initial discharge (mAh/g) | Pellet density (g/cc) | Energy density (Wh/L) | Discharge capacity ratio (2 C/0.1 C; %) | Discharge capacity ratio (5 C/0.1 C;%) |
|---|---|---|---|---|---|---|
| Example 1 | 161.2 | 158.7 | 2.35 | 1268.41 | 86.7 | 78.0 |
| Example 2 | 158.7 | 156.5 | 2.32 | 1234.32 | 86.1 | 77.4 |
| Example 3 | 156.5 | 155.1 | 2.30 | 1210.17 | 84.5 | 75.9 |
| Example 4 | 156.3 | 154.2 | 2.30 | 1206.13 | 84. 3 | 75.1 |
| Example 5 | 161.0 | 153.7 | 2.27 | 1186.23 | 83.6 | 74.9 |
| Example 6 | 155.0 | 153.4 | 2.28 | 1189.29 | 82.7 | 74.3 |
| Example 7 | 156.0 | 152.5 | 2.26 | 1171.53 | 81.5 | 73.3 |
| Example 8 | 152.7 | 151.5 | 2.26 | 1164.24 | 81.1 | 72.6 |

According to the present specification, a spherical positive electrode active material with a smooth surface can be prepared by including a carbon-based compound that satisfies a specific condition in the preparation of a lithium composite phosphorus oxide through calcination of raw materials.

When the positive electrode active material is prepared, a carbon coating layer is formed uniformly, and thus a minimum amount of carbon-based compound can be used.

The positive electrode active material can have excellent energy density due to its high pellet density.

In addition to the above-described effects, specific effects of the present specification are described above while explaining the specific details for implementing the descriptions the specification.

Although embodiments of the present invention have been described above, those skilled in the art can make various modifications and changes to the present invention by adding, changing, or deleting components without departing from the spirit of the present invention as set forth in the claims, which will be included within the scope of rights of the present invention.

## Claims

1. A method of preparing a positive electrode active material for a lithium secondary battery, the method comprising:
(a) mixing a lithium-containing raw material, a transition metal precursor, and a carbon-based compound to prepare a slurry;
(b) pulverizing the particles in the slurry; and
(c) heat treating the pulverized particles to obtain a lithium composite phosphorus oxide,
wherein the B/A ratio of the 25 °C solubility of the carbon-based compound in water (B) to the proportion of the C element (A) is 10.00 g/(L wt%) or more.

2. The method of claim 1, wherein in the slurry in step (a), the Li/Metal ratio of the number of lithium atoms (Li) to the total number of atoms of metal elements excluding lithium (Metal) is 0.95 to 1.10.

3. The method of claim 1, wherein in the slurry in step (a), the C/Metal ratio of the number of carbon atoms (C) to the total number of atoms of metal elements excluding lithium (Metal) is 0.03 to 0.1.

4. The method of claim 1, wherein the B/A ratio of the 25 °C solubility of the carbon-based compound in water (B) to the proportion of the C element (A) is 30.00 g/(L·wt%) or more.

5. The method of claim 1, wherein the carbon-based compound is a compound in which the proportion of the C element (A) in the molecular structure is 30 to 60 wt%.

6. The method of claim 1, wherein the carbon-based compound has a 25 °C solubility in water (B) of 0 to 3,000 g/L.

7. The method of claim 1, wherein in step (a), at least one sub-raw material including an element selected from Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr is additionally added to the slurry.

8. The method of claim 1, wherein the particles pulverized in step (b) have an average particle diameter (D50) of 1.0 µm or less.

9. The method of claim 1, wherein the pulverized particles in step (c) are obtained by spray-drying the slurry obtained in step (b).

10. The method of claim 1, wherein the heat treatment in step (c) is performed in an inert atmosphere at a maximum temperature of 300 to 1,000 °C for 5 to 12 hours.

11. A positive electrode active material for a lithium secondary battery, comprising:
primary particles composed of lithium composite phosphorus oxide; and
secondary particles in which a plurality of primary particles are aggregated,
wherein the primary particles have a spherical shape, and an amorphous carbon coating layer with a thickness of 1 to 30 nm is formed on the surface of at least some of the primary particles.

12. The positive electrode active material of claim 11, wherein the lithium composite phosphorus oxide is represented by Chemical Formula 2 below:
[Chemical Formula 2] LiₚMₓA_{y}B_{z}P_{1-z}O_{w}
where
M is at least one selected from the group consisting of Fe, Mn, Ni, and Co,
A is at least one selected from the group consisting of Ag, Al, As, Au, Ba, Be, Bi, Ca, Cd, Ce, Cr, Cu, Ga, Hf, In, K, La, Mg, Mo, Na, Nb, Nd, Os, Pd, Pr, Pt, Rh, Ru, Sm, Sn, Sr, Ta, Ti, V, W, Y, Zn, and Zr,
B is at least one selected from the group consisting of C, Si, S, N, B, F, Cl, and I, and 0.5≤p≤1.5, 0<x≤1, 0≤y<1, 0≤z<1, 0<w≤4.

13. The positive electrode active material of claim 11, wherein the content of the carbon coating layer is 1.4 to 1.8 wt% based on 100 wt% of the lithium composite phosphorus oxide.

14. A positive electrode comprising the positive electrode active material according to any one of claims 11 to 13.

15. A lithium secondary battery using the positive electrode according to claim 14.
